# EUROPEAN PATENT APPLICATION

(11) **EP 1 647 175 A1**
(43) Date of publication of application: **19.04.2006**
(21) Application number: 05425716.7
(22) Date of filing: 12.10.2005
(51) Int. Cl.: A01D 34/00

(54) **Automatic system for controlling the operating modes of a lawn-mower**

(30) Priority: 13.10.2004 IT FI20040209
(71) Applicant: Zucchetti Centro Sistemi S.p.a., 52028 Terranuova Bracciolini AR (IT)
(72) Inventor: Bernini, Fabrizio, 52051 Bucine-Arezzo (IT)
(74) Representative: Lanzoni, Luciano

(57) **Abstract**

Control system for lawn-mower robots having a blade (L) for cutting the grass, comprising means (2) to sense the speed of rotation of the blade (L) and supply a speed signal (Sv) proportional to said speed; a microprocessor-operated control unit (3) to receive the input speed signal (Sv) and comprising processing means to process the speed signal (Sv) and supply an output signal Sₒᵤₜ able to code data relevant to the grass state; and pilot means (4) for piloting one or more robot's actuators according to the output signal Sₒᵤₜ.

## Description

The present invention refers to a lawn-mower robot of automatic or semiautomatic type and, in particular, to an automatic system for controlling the operating modes of the lawn-mower.

The operation of the lawn-mowers presently known, which are obviously either of automatic or manual type, has often characteristics common to the various models. In particular, their operating mode, for example the duration of the cutting operation and/or the choice of the time upon which the cut is to be operated, is normally preset by either a timer or user-settable electronic programmers.

Accordingly, it may happen that the cutting time be set too long, with consequent waste of energy, or too short, with the result of an incomplete trimming of the area under work.

A further operating characteristic of many of such robots is related to the trajectory that they have to follow to cover the area of concern. To this end, it is pointed out that, practically, all the lawn-mowers follow trajectories that change at random every time they meet an obstacle or arrive at the perimetral edge of the area to be worked.

This operating mode has, however, some disadvantages as well. In particolar, it is to be stressed that the use of fully random trajectories can possibly imply the robot either passing more times on the same patch already trimmed, or never passing on other regions which, thereby, would remain untreated. In any case, a far longer working time will be necessary to operate the cutting over the whole area of interest, with consequent waste of energy and time.

These and many other aspects of the operating modes of this type of robots result thus non-optimized in relation to the actual work that the robot has to carry out and, therefore, are a source of low efficiencies and/or poor quality of the work being carried out.

The present invention has the object of improving the operation of apparatuses of this type, by optimizing their functional modes according to the ambient conditions that the robot meets during its work.

This object is obtained by an automatic system for controlling the operating modes of a lawn-mower robot, as defined in claim 1.

Secondary aspects and characteristics of the invention are defined in the attached dependent claims.

Moreover, the present invention also refers to a lawn-mower robot as defined in claim 11.

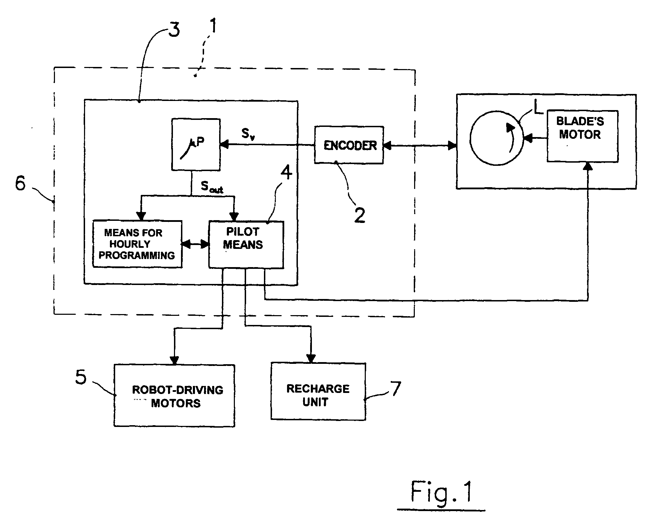

Advantages, characteristics and ways of use of the present inventions will result evident by a reading of the following deatiled description of a prefered embodiment thereof given by way of illustrative and non-limiting example, reference being made to the accompanying drawing in which Fig. 1 is a block diagram of a lawn-mower robot according to the present invention.

The present invention is based on the use of information drawn from a measurement of the speed of the lawn-mower's blade.

Actually, the speed of a lawn-mower's blade is initially steady, since the motor of the same blade is usually driven in such a way so that it works at constant speed.

However, it has been observed that the blade's speed changes according to the resistance that the same blade encounters during the cut, especially when cutting grass or bushes of different mechanical resistance an/or presence/absence of grass to be cut. In particular, in the absence of high grass, the speed of the blade settles in at a certain level and remains stable. When, instead, there is grass to be cut, the speed varies continually on the basis of the resistance the same blade encounters.

The present invention is actually based on this principle: by processing data relevant to blade's speed measurements, the control system is able to determine whether the robot is in a region in which high grass is present or in a region having the grass already cut.

With reference to Fig. 1, a control system 1 according to the present invention comprises means 2 for detecting the rotational speed of a blade L of the lawn-mower robot.

Said speed-detection means comprise, for example, an encoder, mounted on the rotary shaft of blade L and able to feed a speed signal Sv, proportional to the blade's speed, to a microprocessor-operated control unit 3. Such microprocessor-operated unit comprises processing means able to process said signal Sv, in particular it comprises a software which, by processing data relevant to the speed of blade L, is able to instantaneously determining whether the robot is cutting or not the grass. This information relevant to the state of the grass and being coded into an output signal Sₒᵤₜ, is then used for suitably driving the robot so as to optimize its functions and/or to implement new ones.

More specifically, the signal Sₒᵤₜ is used to control, either directly or through pilot means 4, the actuators of the lawn-mower robot consisting, for example, of motors for its displacement on the ground 5, a motor 6 for moving the blade, and possibly also a battery-recharge unit 7, so as to perform the desired functions.

The description of the electric circuitry of the pilot means is omitted as well known to any skilled in the art.

By way of illustration only, some examples are given herebelow on how to use a system according to the invention to improve the operation and/or efficiency of the robot.

The algorithm given herebelow and written in a high-level metalanguage, provides an example of implementation of the software-operated control. In the example, la "vblade" variable indicates the instantaneous speed of the blade, as measured by the encoder, the "grass" variable is a flag indicating whether the grass is present or not (grass=0 no high grass; grass=1 presence of high grass); the "dmax" constant is preset at the value of maximum speed variation, so that it is right to consider the blade's speed stable.

The algorithm, for a preset time interval, such as 10 seconds for example, allows computing the minimum speed (vmin) and maximum speed (vmax) of the blade; if the difference vmax - vmin results higher than dmax, it means that the revolutions per minute of the blade change significantly and a presence of grass to be cut is inferable; if the difference is less than dmax it means that the speed of the blade is stable and, therefore, the blade is probably turning idly because there is no grass to be cut.
**Start:**
vmin = vblade
vmax = vblade
*reset timer*
until timer < 10 s
if vblade < vmin, then vmin = vblade
if vblade > vmax, then vmax = vblade
if vmax - vmin > dmax, then grass = 1, otherwise grass = 0
*return to* **start**

The variable "grass" carries substantially the information necessary to optimize some operating modes of the lawn-mower.

A further characteristic, typical of many lawn-mower robots, consists in the determination of the trajectories to be run inside the work perimeter. Normally, the machine is moved along a straight line until it runs into an obstacle or comes across the perimetral edge; at this point, it performs a rotation through an angle of random extent and re-starts by following the new trajectory.

The control software, in a fully casual manner, decides to perform a spiral trajectory, that is, it causes the machine to travel along a spiral-shaped trajectory of fixed pitch, the latter being less than the width of the cutting blade. The execution of the spiral allows obtaining the complete cut of a circular area.

The high limit of the approach above described is the casual activation of the spiral. If the software decides to follow the spiral when the machine is in a region of the lawn where the grass has been already cut, a lot of time is wasted with no benefits whatever. The control system according to the present invention, instead, implements a new function which solves this problem. The control system allows activating non-straight trajectories, for example of spiral form, in a more intelligent manner. In particular, the microprocessor-operated control unit 3 comprises pilot means 4 to activate/deactivate the execution of a non-straight trajectory as a function of the output signal Sₒᵤₜ. More specifically, according to the present invention, the software of the control unit generates a signal Sₒᵤₜ that will be utilized afterwards by the pilot means 4 to enable the execution of a spiral trajectory only when the signal Sₒᵤₜ indicates the presence of grass to be cut.

Moreover, a check of the state of the grass is repeatedly carried out also during the execution of the spiral. Should the control system determine that there is no grass to cut, the software of the control unit 4 would disable the execution of the spiral and the robot would be driven in such a way as to resume its rectilinear trajectory.

In addition, provision may be made that non more than one spiral be performed for each straight trajectory, so as to ensure a sufficiently uniform treatment of the whole lawn.

The effect obtained from this function is that the machine moves in a straight line across the lawn, searching for a patch with high grass; when found, it runs the spiral so as to cut the grass in that patch, then, it resumes its movement along straight trajectories.

Given herebelow, by way of example only, is an algorithm in pseudo-code which implements the function of intelligent activation of non-straight trajectories. The meaning thereof is not described as being self-evident also from the names of the indicated variables.
**Start**
*moves in straight line*
activated = 0
until it encounters the perimeter or runs into an obstacle
if grass = 0 then *deactivate spiral*
if grass = 1 and activated = 0 then
*activate spiral*
activated = 1
*deactivate spiral*
*change direction*
*return to* **start**

A further characteristic of the system according to the present invention consists in carrying out a modulation of the energy supplied to the electric motor that drives the cutting blade. It is known, in fact, that the cutting motor is one of the components which mostly accounts for the electric consumption of the machine. Usually, this motor runs always at the maximum power so as to have the force necessary to carry out a high-quality cut. However, in the absence of grass to be cut, this is a waste of energy. According to the present invention, the control unit 3 comprises pilot means able to modulate the amount of electric energy, supplied to the motor 6 of blade L, as a function of the output signal Sₒᵤₜ.

In this way, under no-grass conditions, the software of the control unit 3 drives the blade's motor into a "low consumption" mode, as suitable for the maintanance of a lawn with few grass to be cut, but not suitable for cutting high grass.

The control system performs cyclically a check of the state of the grass. In this way, the control software is able to shift automatically from a "low consumption" mode to a normal mode and vice versa, according to the conditions of the grass. As a consequence, the motor runs at amximum power only when really necessary.

Considering that these machines are powered by batteries, the main advantage obtained from this function is a lower consumption of the battery charge and, thus, a longer work cycle.

Given herebelow, by way of example only, is a pseudocode disclosing the implementation of the function for the modulation of the blade's power. A detailed disclosure of the algorithm is omitted for the sake of simplicity.
**Start**
if grass = 0 then *activate low consumption mode*
if grass = 1 then *deactivate low consumption mode*
*return to* **start**

The lawn-mower robots can be programmed so as to define the working time, for example in order not to interfere with the sprinkling hours. Besides, it is also possible to set the total daily working time, that is, the time that it is deemed necessary for the machine to cover the whole area to be cut.

However, it should be evident that such total working time is difficult to be evaluated beforehand, as it depends on a number of variables such as, for example, the season and weather conditions (the machine may remain inoperative because of the rain). Accordingly, if the user sets an insufficient working time, the machine is not able to ensure the treatment of the whole lawn. If, on the contray, a longer-than-necessary working time is set, the robot keeps working the lawn even if tere is no need to cut the grass.

According to the present invention, the microprocessor-operated control unit 3 comprises also means for programming the working hours and/or the total daily work of the robot, again as a function of the output signal Sₒᵤₜ.

In particular, the processing software, implements a further new function which exploits the control of the grass' state in order to compute a percentage of ther "complete cut".

The total time of work is thus modified dynamically, possibly within manually preset limits, so as to work more when there is grass to be cut and less when the grass has been already cut.

The advantage introduced by this function is that the user must never worry about assessing properly the working time necessary for the robot to service the lawn, but he/she must simply set the working time by taking into account the sprinkling hours possibly provided. The robot, therefore, will modify its daily working time according to the conditions of the lawn by adapting automatically its operating mode to the actual season and weather conditions.

Given herebelow, by way of example only, is a pseudocode disclosing the implementation of said self-programming function. It is deemed appropriate to omit a detailed description of the algorithm by indicating only with "n" a variable that counts the number of checks being carried out, and with "s" a variable that counts the number of checks relating to grass already cut.
n = 0
s = 0
*reset timer*
cycle:
if timer > 1 minute
n = n + 1
if grass = 0 then s = s + 1
*reset timer*
*return to* cycle.

Again according to present invention, the robot is provided with a recharge unit for recharging the batteries 7, and the control system is able to implement a battery-recharge function. In particular, the control unit 3 comprises pilot means 4 able to activate/deactivate the battery-recharge unit 7 according to the output signal Sₒᵤₜ.

Herebelow is an example of the software algorithm, written in a pseudocode, that implements such function. On the basis of the variables n and s obtained from the above algorithm, the systen calculates the percentage of completed lawn ("completed" variable). Indicated by "pmax" is the maximum time of pause provided by the self-programming function, and indicated by "pause" is the dwell time set as a function of the percentage of completed garden.

In this example, the self-programming allows setting a dwell period only if the lawn is completed by at least 80%. This percentage is obviously settable at will by the user.
Completed = 100 * s/n
if completed > 95 then pause = pmax
otherwise, if completed > 90 then pause =pmax * 0,75
otherwise, if completed > 85 then pause = pmax * 0,5
otherwise, if completed > 80 then pause = pmax * 0,25
otherwise, pause = 0
*activate recharge*
*wait for the pause time*
**cycle:**
if recharge is complete, and the working time is in progress, then
*exit from reachrge*
*return to* **cycle**

The present invention has been described so far through a prefered embodiment thereof given only by way of non-limiting example.

It should be understood that other embodiments of the inventions can be provided, all of them to be considered as falling within the scope of the protection granted to the same invention, as defined in the appended claims.

## Claims

1. Control system for lawn-mower robots having a blade (L) for cutting the grass, **characterized in that** it comprises:
means (2) to sense the speed of rotation of said blade (L) and supply a speed signal (Sv) proportional to said speed;
a microprocessor-operated control unit (3) able to receive said input speed signal (Sv) and comprising processing means able to process said speed signal (Sv) to supply an output signal Sₒᵤₜ able to code data relevant to the grass state; and
pilot means (4) for piloting one or more robot's actuators according to said output signal Sₒᵤₜ.

2. Control system according to claim 1, wherein said means for sensing the rotation of said blade (L) comprise an encoded (2) mounted on the rotary shaft of the blade (L).

3. Control system according to claim 1 or 2, wherein said processing means comprise a software for determing the speed of said blade.

4. Control system according to any of claims 1 to 3, wherein said actuators comprise one or more motors for displacing the robot on the ground.

5. Control system according to claim 4, wherein said pilot means (4) are able to activate/deactivate the execution of a non-straight trajectory as a function of the output signal Sₒᵤₜ.

6. Control system according to any of claims 1 to 5, wherein said actuators comprise a motor (6) for driving said blade (L).

7. Control system according to claim 6, wherein said pilot means (4) are able to modulate the amount of energy supplied to the motor (6) of blade (L) as a function of the output signal Sₒᵤₜ.

8. Control system according to any of claims 1 to 7, wherein said actuators comprise a battery-recharge unit (7).

9. Control system according to claim 8, wherein said pilot means (4) are able to activate/deactivate said battery-recharge unit (7) as a function of the output signal Sₒᵤₜ.

10. Control system according to any of claims 1 to 9, wherein said microprocessor-operated control unit (3) comprises means for programming the working hours and/or the total daily working time of the robot, as a function of the output signal Sₒᵤₜ.

11. Robot, in particular of lawn-mower type, **characterized in that** it comprises a control system according to any of the preceding claims.
